(19) Europäisches Patentamt
European Patent Office
Office européen des brevets

(11) **EP 1 562 808 B1**

(12) **EUROPÄISCHE PATENTSCHRIFT**

(45) Veröffentlichungstag und Bekanntmachung des Hinweises auf die Patenterteilung:
**20.01.2016 Patentblatt 2016/03**

(21) Anmeldenummer: **03778344.6**

(22) Anmeldetag: **07.11.2003**

(51) Int Cl.:
***B60T 8/17*** *(2006.01)*     ***B60T 8/1755*** *(2006.01)*

(86) Internationale Anmeldenummer:
**PCT/EP2003/050803**

(87) Internationale Veröffentlichungsnummer:
**WO 2004/041613 (21.05.2004 Gazette 2004/21)**

(54) **VERFAHREN UND EINRICHTUNG ZUM STABILISIEREN EINES GESPANNS**

METHOD AND SYSTEM FOR STABILIZING A VEHICLE COMBINATION

PROCEDE ET SYSTEME DE STABILISATION D'UN ATTELAGE

(84) Benannte Vertragsstaaten:
**DE FR IT**

(30) Priorität: **08.11.2002 DE 10252508**

(43) Veröffentlichungstag der Anmeldung:
**17.08.2005 Patentblatt 2005/33**

(73) Patentinhaber: **Continental Teves AG & Co. oHG
60488 Frankfurt am Main (DE)**

(72) Erfinder:
- **WALDBAUER, Dirk
  65817 Eppstein (DE)**
- **KRÖBER, Jürgen
  56333 Winningen (DE)**
- **SCHMITT, Clemens
  64625 Bensheim (DE)**

(56) Entgegenhaltungen:
DE-A- 10 031 266    DE-A- 10 032 230
DE-A- 10 048 418    DE-A- 19 964 048
US-B1- 6 219 610

**Beschreibung**

Die Erfindung betrifft ein Verfahren und eine Einrichtung zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden.

Das Verfahren zielt darauf ab, die Instabilitäten bei Fahrzeuggespannen (Kraftfahrzeug mit Anhänger), speziell von Kombinationen aus PKW und beliebigen Anhängern, insbesondere Wohnanhängern zu erkennen und auszuregeln, bevor Fahrzustände auftreten, die vom Fahrer nicht mehr beherrscht werden können. Diese instabilen Zustände sind das bei Gespannen bekannte Schlingern und gegenphasige Aufschaukeln von Zugfahrzeug und Anhänger sowie sich anbahnende Überrollzustände bei zu hoher Querbeschleunigung im Falle von Ausweichmanövern, Spurwechseln, Seitenwind, Fahrbahnstörungen oder hastigen Lenkanforderungen durch den Fahrer.

Je nach Fahrgeschwindigkeit können die Schwingungen abklingen, konstant bleiben oder sich verstärken (ungedämpfte Schwingung). Bleiben die Schwingungen konstant, so hat das Gespann die kritische Geschwindigkeit erreicht. Oberhalb dieser Geschwindigkeitsschwelle ist ein Gespann instabil, darunter stabil, d.h. eventuelle Schwingungen klingen ab.

Die Höhe dieser kritischen Geschwindigkeit ist abhängig von den Geometriedaten, den Reifensteifigkeiten, dem Gewicht und der Gewichtsverteilung des Zugfahrzeugs und des Anhängers. Außerdem ist die kritische Geschwindigkeit bei gebremster Fahrt niedriger, als bei Konstantfahrt. Bei beschleunigter Fahrt ist sie wiederum höher als bei konstanter Fahrt.

Entsprechende Verfahren und Vorrichtungen sind in verschiedenen Ausbildungen bekannt (DE199 53 413 A1, DE 199 13 342 A1, DE 197 42 707 A1, DE 100 34 222 A1, DE 199 64 048 A1).

Aus der DE 197 42 702 C2 ist eine Einrichtung zum Dämpfen von Schlingerbewegungen für mindestens einen von einem Zugfahrzeug gezogenen Anhänger bekannt, bei dem die Winkelgeschwindigkeit des Anhängers um den Momentanpol oder der Knickwinkel um den Momentanpol erfasst und differenziert wird, und zur Regelung der Radbremsen des Anhängers heran gezogen wird. Als Sensoren für die Winkelgeschwindigkeit dienen Beschleunigungsmesser in unterschiedlicher Lage. Die DE 199 64 048 A1 sieht ebenfalls einen Querbeschleunigungssensor vor, mittels dem die Schlingerbewegung ermittelt wird. Nach Auswertung des Signals soll dem Fahrzeug ein periodisches Giermoment eingeprägt werden. Die DE 100 34 222 A1 ermittelt einen Zeitpunkt zum phasenrichtigen Bremseingriff, der in Abhängigkeit von der Frequenzgröße und der Phasengröße der Schlingerbewegung gebildet wird.

Aus der DE 100 48 418 ist ein Verfahren zur Stabilisierung eines Fahrzeugs bekannt, wonach eine erkannte kritische Fahrzeugschwingung durch wechselseitige Bremseingriffe gedämpft wird, wobei das Aufbringen des der Fahrzeugschwingung entgegen wirkenden Giermoments im wesentlichen synchron zur Gierbeschleunigung des Fahrzeugs ist.

Zusammenfassend lässt sich die Stabilisierungsstrategie aller Ausführungsvarianten wie folgt zusammenfassen:

- Erkennung des Schlingerns durch Auswertung der Sensorinformationen über die Gierrate bzw. Querbeschleunigung, des Lenkwinkels und der Radgeschwindigkeiten, wobei sämtliche Sensoren vorteilhaft im Zugfahrzeug untergebracht sind.
- Bei erkannter instabiler Situation erfolgt ein Abbremsen des Fahrzeugs durch Reduzierung des Motormoments und Druckaufbau in den Radbremsen des Zugfahrzeugs.
- Zusätzlich oder Alternativ erfolgt das Aufbringen eines Moments um die Hochachse des Zugfahrzeugs, welches der vom Anhänger auf das Zugfahrzeug übertragenen Kraft entgegenwirkt und somit die Schwingung bedämpft.

Letzteres kann alternativ durch einseitige Bremseneingriffe an mindestens einer Achse oder durch Eingriffe einer Überlagerungslenkung umgesetzt werden. Bei beiden Methoden ist es notwendig, das Moment phasenrichtig aufzubringen, um die Schwingung nicht zusätzlich anzuregen.

Der Erfindung liegt die Aufgabe zugrunde, ein Verfahren und eine Einrichtung zu schaffen, die die Ermittlung des phasenrichtigen Zeitpunkts für das Aufbringen des Gegenmoments ermöglichen.

Diese Aufgabe wird erfindungsgemäß durch ein Verfahren gemäß Anspruch 1 und eine Einrichtung gemäß Anspruch 9 gelöst.

Dabei erfolgt über die von einem Drehratensensor gemessenen und in einer ESP Fahrdynamikregelung abgeleiteten und logisch mit der ESP Regelungsstrategie verknüpften Daten, in die Daten eines Kraftfahrzeugs einbezogen werden können, eine Generierung eines Ansteuersignals für einen Elektromotor einer Hydraulikpumpe, die einen Bremsdruck erzeugt und damit die Radbremse betätigt. Alternativ oder zusätzlich kann auch ein Aktuator einer Überlagerungslenkung angesteuert werden. Durch die Einbremsung eines Rades des Zugfahrzeugs oder durch die Einbremsung aller Räder des Zugfahrzeugs mit unterschiedlichem Bremsdruck entsprechend einer ESP Regelstrategie, können durch Abbau der Seitenkräfte an dem einen Rad mit erhöhtem Bremsdruck und/oder der Erhöhung der Längskräfte die sensorisch erfassten Instabilitäten des Anhängers korrigiert und die ggf. zu hohe Querdynamik des Gespanns abgebaut werden.

Vorteilhaft ist, dass die Gierwinkelgeschwindigkeit $\dot{\Psi}$ sensorisch erfasst wird und die Gierwinkelbeschleunigung $\ddot{\Psi}$ in einem Modell von der Gierwinkelgeschwindigkeit abgeleitet wird. Dabei wird das zur Quantifizierung und Steuerung des Eingriffs genutzte Signal $\ddot{\Psi}$ durch Ableitung aus dem Signal $\dot{\Psi}$ gebildet, welches direkt als Sensorsignal des Drehratensensors in der Fahrstabilitätsregelung zur Verfügung steht. Es muss somit vorteilhaft kein zusätzlicher Sensor zur Verfügung gestellt werden, was die Kosten des erfindungsgemäßen Verfahrens reduziert.

Die stabilisierende Steuerung des Gespanns erfolgt so, dass das Maximum der Gierwinkelbeschleunigung ermittelt wird und die fahrstabilisierenden Maßnahmen in Abhängigkeit von dem ermittelten Maximum eingeleitet werden. Danach werden die fahrstabilisierenden Maßnahmen vorteilhaft so lange aufrecht erhalten, bis die Gierwinkelbeschleunigung den Wert Null oder einen Wert in einem Toleranzband um Null erreicht Dadurch erfolgt der Eingriff deutlich früher und wird zudem rechtzeitig beendet, bevor eine Anregung der Schwingung erfolgen kann.

Der Vorteil des Verfahrens besteht weiterhin darin, dass der Eingriff immer dann aktiv geschaltet wird, sobald das Zugfahrzeug aus der maximalen Auslenkung herausläuft. Dabei wirken die fahrstabilisierenden Maßnahmen so, dass die Rückschwinggeschwindigkeit des Zugfahrzeugs abgebremst wird, und somit die Amplitude der nächsten Schwingung reduziert.

Das Verfahren ergänzt vorteilhaft eine Fahrstabilitätsregelung, wobei die fahrstabilisierenden Maßnahmen parallel zu einer ESP Regelung durchgeführt werden. Da die fahrstabilisierenden Maßnahmen beim ermittelten Schlingern deutlich früher eingeleitet werden als ein ESP Eingriff bei ermittelter Drehung um die Hochachse des Fahrzeugs, wirken die fahrstabilisierenden Maßnahmen bereits im Vorfeld einer ESP Regelungssituation. Dies kann zur Vermeidung eines ESP Eingriffs oder Verringerung der Intensität des ESP Eingriffs führen. Erfindungsgemäß werden die fahrstabilisierenden Maßnahmen während einer ESP Regelung unter der Bedingung durchgeführt, dass die ESP Schwelle bzw. Schwellen, bei deren Über- bzw. Unterschreiten ein ESP Eingriff einleitet bzw. beendet wird, modifiziert werden. Vorteilhaft wird die ESP Schwelle so modifiziert, dass der ESP Eingriff erst bei einer größeren Differenz zwischen der Soll- und Ist-Gierwinkelgeschwindigkeit durchgeführt wird.

Als fahrstabilisierende Maßnahme wird ein ESP Bremsenvoreingriff an mindestens einem Rad durchgeführt. Durch das Verfahren erfolgt der Eingriff deutlich früher und wird zudem rechtzeitig beendet, bevor eine Anregung der Schwingung erfolgen kann. Vorteil der Methode ist weiterhin, dass Fehleingriffe durch Fehlinterpretation der Signale keine negativen Auswirkungen auf das Fahrzeugverhalten haben. Sollte ein solcher Eingriff bei einem Fahrzeug ohne Anhänger aktiviert werden, so wirkt er immer stabilisierend und wird bei abnehmender Gierrate sofort inaktiv.

Eine weitere vorteilhafte Ausgestaltung des Verfahrens sieht vor, bei der Aufbringung des Moments über die Radbremsen, in den Zeiträumen zwischen den abwechselnden Eingriffen an beiden Rädern der Eingriffsachse einen kleinen Druck (ca. 5 bar) anstehen zu lassen, damit die Bremsbeläge angelegt bleiben. Dadurch verkürzt sich die Ansprechzeit der Bremsen und das Gegenmoment wird schneller wirksam.

Ein weiterer Vorteil des Verfahrens besteht weiterhin darin, dass die Berechnung des Gegenmoments einfach auszuführen ist, da das Gegenmoment in Korrelation zu der Gierwinkelbeschleunigung nach der folgenden Beziehung ermittelt wird: Gegenmoment = Verstärkung * $\ddot{\Psi}$.

Durch die Frequenzabhängigkeit des Signals $\ddot{\Psi}$ ergibt sich vorteilhaft, dass durch die oben dargestellte Beziehung bei hohen Schwingfrequenzen (heftige Schwingungen), bei denen die Wirkzeit des Eingriffs kürzer wird, sich automatisch höhere Momentenanforderungen ergeben.

Ferner wird die Aufgabe dadurch gelöst, dass eine gattungsgemäße Einrichtung so ausgestaltet wird, dass die Einrichtung eine ESP Fahrstabilitätsregelung mit einem Gierratensensor zum Erfassen der Gierwinkelgeschwindigkeit und eine Ermittlungseinheit enthält, die aus der Gierwinkelgeschwindigkeit Größen berechnet, die die Gierwinkelbeschleunigung wiedergeben, die der ESP Fahrstabilitätsregelung zur Steuerung des Bremsdrucks in den Radbremsen zur Verfügung gestellt werden.

Ein Ausführungsbeispiel der Erfindung ist in den Zeichnungen dargestellt und wird im Folgenden näher beschrieben.

Es zeigen:

Fig. 1.    ein Fahrzeug mit ESP Regelungssystem
Fig. 2    die Signale eines schwingenden Zugfahrzeugs
Fig. 3    schematisch an einem Beispiel den Zusammenhang zwischen der Drehung des Fahrzeugs um seine Hochachse und der an der Anhängerkupplung aufgebrachten Kraft.

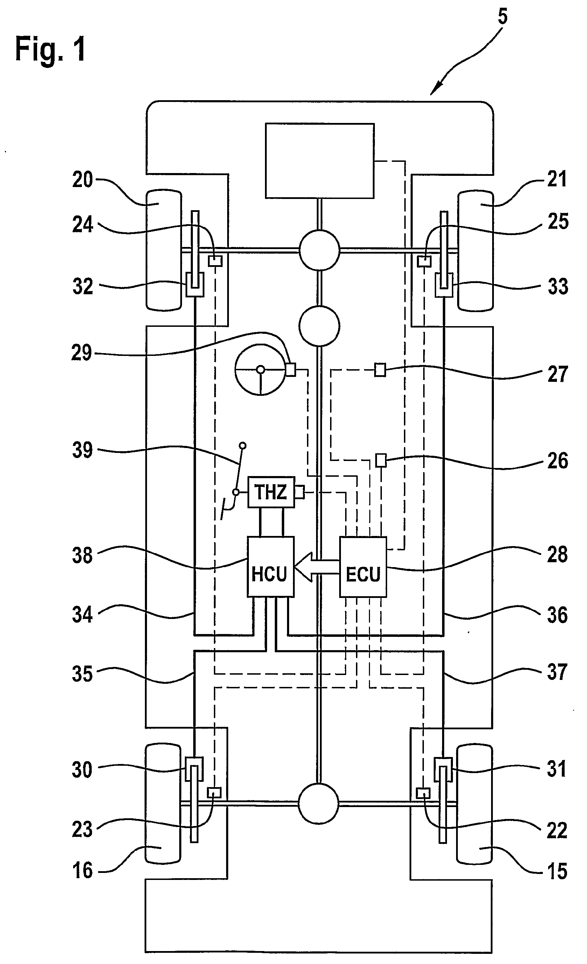

In Fig. 1 ist ein Fahrzeug mit ESP-Regelungssystem, Bremsanlage, Sensorik und Kommunikationsmöglichkeiten schematisch dargestellt. Die vier Räder sind mit 15, 16, 20, 21 bezeichnet. An jedem der Räder 15, 16, 20, 21 ist je ein Radsensor 22 bis 25 vorgesehen. Die Signale werden einer Elektronik-Steuereinheit 28 zugeführt, die anhand vorgegebener Kriterien aus den Raddrehzahlen die Fahrzeuggeschwindigkeit v ermittelt. Weiterhin sind ein Gierratensensor 26, ein Querbeschleunigungssensor 27 und ein Lenkradwinkelsensor 29 mit der Komponente 28 verbunden. Jedes Rad weist außerdem eine individuell ansteuerbare Radbremse 30 bis 33 auf. Diese Bremsen werden hydraulisch betrieben und empfangen unter Druck stehendes Hydraulikfluid über Hydraulikleitungen 34 bis 37. Der Bremsdruck wird über einen Ventilblock 38 eingestellt, wobei der Ventilblock von elektrischen Signalen Fahrer unabhängig angesteuert wird, die in der elektronischen Steuereinheit 28 erzeugt werden. Über ein von einem Bremspedal betätigten Hauptzylinder kann von dem Fahrer Bremsdruck in die Hydraulikleitungen eingesteuert werden. In dem Hauptzylinder bzw. den Hydraulikleitungen sind Drucksensoren P vorgesehen, mittels denen der Fahrerbremswunsch erfaßt werden kann. Über eine Schnittstelle (CAN) ist die Elektronik-Steuereinheit mit dem Motorsteuergerät verbunden Über das ESP-Regelungssystem mit Bremsanlage, Sensorik und Kommunikationsmöglichkeiten das die Ausstattungselemente

- vier Raddrehzahlsensoren
- Drucksensor (Bremsdruck im Hauptzylinder $p_{main}$)
- Querbeschleunigungssensor (Querbeschleunigungssignal $a_{ist}$, Querneigungswinkel $\alpha$)
- Gierratensensor ($\dot{\psi}$)
- Lenkwinkelsensor (Lenkwinkel ö, Lenkwinkelgeschwindigkeit $\dot{\delta}$)
- individuell ansteuerbare Radbremsen
- Hydraulikeinheit (HCU)
- Elektronik-Steuereinheit (ECU)

aufweist, lässt sich eine Aussage über die jeweilige Fahrsituation und damit über eine Bestimmung der Ein- und Austrittsbedingungen eine aktivierte bzw. deaktivierte Regelungssituation realisieren. Damit ist eine Hauptkomponente des Verfahrens zur Stabilisierung von Gespannen, die Fahrsituationserkennung, möglich, während die andere Hauptkomponente, die Interaktion mit dem Bremssystem, ebenfalls auf die wesentlichen Komponenten der Fahrstabilisationsregelung zurückgreift.

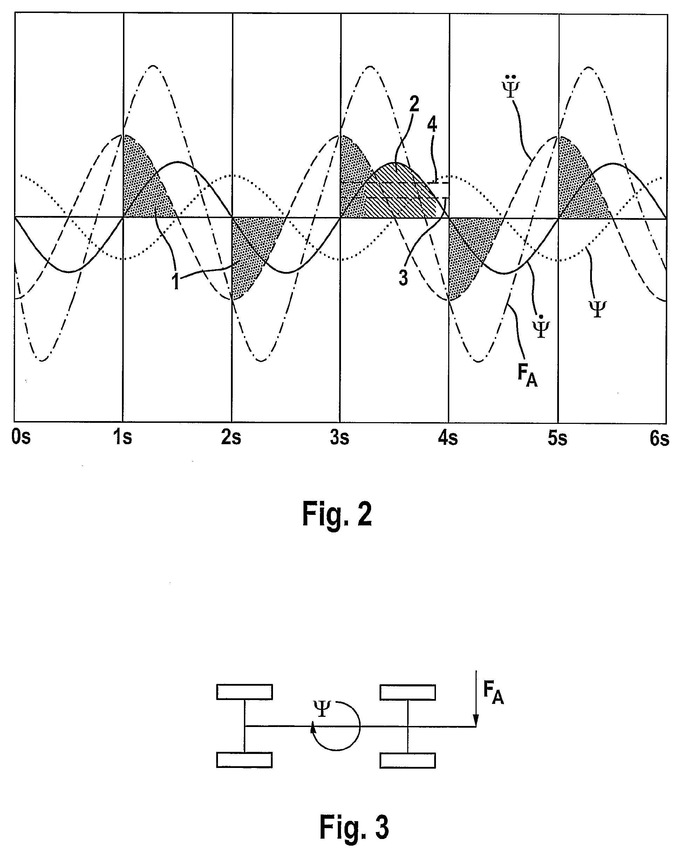

In Figur 2 sind die Signale eines schwingenden Zugfahrzeugs abgebildet.

Die wesentlichen Signale sind wie folgt dargestellt und bezeichnet:

$\Psi$ Gierwinkel des Zugfahrzeugs (gepunktete Linie)
$\dot{\Psi}$ Gierwinkelgeschwindigkeit des Zugfahrzeugs (massive Linie)
$\ddot{\Psi}$ Gierwinkelbeschleunigung des Zugfahrzeugs (gestrichelte Linie)
$F_A$ Kraft, mit der der Anhänger in y-Richtung auf die Anhängerkupplung wirkt (Strich-Punkt-Linie)

Ein konventioneller ESP-Eingriff dient dazu, durch gezielte Eingriffe an den einzelnen Bremsen eines Fahrzeugs ein zusätzliches Drehmoment zu schaffen, welches die tatsächlich gemessene Gierwinkeländerung pro Zeiteinheit (Ist-Gierrate $\dot{\Psi}_{ist}$) eines Fahrzeugs zu der von dem Fahrer beeinflussten Gierwinkeländerung pro Zeiteinheit (Soll-Gierrate $\dot{\Psi}_{soll}$) hinführt. Dabei werden stets Eingangsgrößen, welche aus der von dem Fahrer gewünschten Kurvenbahn resultieren (beispielsweise Lenkradwinkel, Fahrgeschwindigkeit), einer Fahrzeugmodellschaltung zugeführt, welche anhand eines bekannten Einspurmodells oder eines anderen Fahrmodells aus diesen Eingangsgrößen und für das Fahrverhalten des Fahrzeugs charakteristischen Parametern, aber auch durch die Eigenschaften der Umgebung vorgegebenen Größen (Reibwert der Fahrbahn) eine Soll-Gierrate ($\dot{\Psi}_{soll}$), bestimmt, die mit der gemessenen tatsächlichen Gierrate ($\dot{\Psi}_{ist}$) verglichen wird. Die Differenz der Soll-/Ist-Gierrate ($\Delta\dot{\Psi}_{Diff}$) wird mittels eines sogenannten Giermomentreglers in ein zusätzliches Giermoment $M_G$ umgerechnet, welches die Eingangsgröße einer Verteilungslogik bildet.

Die Verteilungslogik selbst bestimmt wiederum, ggf. in Abhängigkeit von einem einen bestimmten Bremsdruck an den Radbremsen anfordernden Bremswunsch des Fahrers, den an den einzelnen Bremsen aufzubringenden Bremsdruck. Dieser soll zusätzlich zu der gegebenenfalls erwünschten Bremswirkung noch ein zusätzliches Drehmoment an dem Fahrzeug erzeugen, welches das Fahrverhalten des Fahrzeugs in Richtung des Lenkwunsches des Fahrers unterstützt.

Die ESP Fahrstabilitätsregelung wird aktiv, sobald die Gierrate $\Delta\dot{\Psi}_{Diff}$ eine obere Schwelle 4 überschreitet. Das Maß des Eingriffs wird über die Größe der Gierratendifferenz berechnet. Unterschreitet die Gierrate $\dot{\Psi}_{ist}$ eine untere Schwelle 3, wird der Eingriff beendet. Die Schwellen 3, 4(gestrichelte waagerechte Linien) und der Zeitraum des Eingriffs (2; schraffierter Bereich) sind in Figur 2 dargestellt.

Um eine Gespannschwingung zu bedämpfen, muss das aufgebrachte Giermoment $M_G$ der an der Anhängerkupplung wirkenden Kraft $F_A$ entgegenwirken. Dies ist beim konventionellen ESP Eingriff nicht der Fall. Zum einen wirkt der ESP Eingriff erst spät, zum anderen unter Umständen auch zu lange, so dass das Moment die Schlingerbewegung des Anhängers sogar verstärkt.

Das Verfahren bildet daher in einem Modell die Ableitung der Giergeschwindigkeit $\ddot{\Psi}$, um den Eingriff zu steuern. So erfolgt der ESP Bremsenvoreingriff deutlich früher und wird zudem rechtzeitig beendet, bevor eine Anregung der Schwingung erfolgen kann. Der Zeitraum, in dem der Bremsenvoreingriff aktiv ist, ist in Figur 2 dargestellt (1, massiv gefüllt). Vorteil der Methode ist, dass der Eingriff immer dann aktiv geschaltet wird, sobald das schematisch in Figur 3 dargestellte Zugfahrzeug 5 aus der maximalen Auslenkung herausläuft. Dabei wirkt der Eingriff so, dass die Rückschwinggeschwindigkeit des Zugfahrzeugs 5 abgebremst wird, und somit die Amplitude der nächsten Schwingung reduziert.

Vorteil des Verfahrens ist weiterhin, dass eventueller Fehleingriffe durch Fehlinterpretation der Signale, keine negativen Auswirkungen auf das Fahrzeugverhalten hat. Sollte ein solcher Bremsenvoreingriff bei einem Fahrzeug ohne Anhänger aktiviert werden, so wirkt er immer stabilisierend und wird bei abnehmender Gierrate sofort inaktiv.

Eine weitere vorteilhafte Ausgestaltung des Verfahrens sieht vor, bei der Aufbringung des Moments über die Radbremsen, in den Zeiträumen zwischen den abwechselnden Eingriffen an beiden Rädern der Eingriffsachse einen kleinen Druck (ca. 5 bar) anstehen zu lassen, damit die Bremsbeläge angelegt bleiben. Dadurch verkürzt sich die Ansprechzeit der Bremsen und das Gegenmoment wird schneller wirksam.

Vorteil der Methode ist weiterhin, dass die Berechnung des Gegenmoments einfach zu bewerkstelligen ist:

$$\text{Gegenmoment} = \text{Verstärkung} * \ddot{\Psi}$$

Vorteil der Methode ist weiterhin, dass durch die Frequenzabhängigkeit des Signals $\ddot{\Psi}$ durch die oben dargestellte Berechnungsformel bei hohen Schwingfrequenzen (heftige Schwingungen), bei denen die Wirkzeit des Eingriffs kürzer wird, sich automatisch höhere Momentenanforderungen ergeben.

Das Verfahren nach der Erfindung ist nicht auf das vorstehend beschriebene Ausführungsbeispiel beschränkt und umfasst auch die Möglichkeit, ein beliebig zur Gierrate oder Querbeschleunigung phasenverschobenes Signal entsprechend der Gierwinkelbeschleunigung zu bilden, das ebenfalls die Querdynamik repräsentiert, um damit das stabilisierende Bremsmoment zu steuern.

**Patentansprüche**

1. Verfahren zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden und die fahrstabilisierenden Maßnahmen in Abhängigkeit von der Gierwinkelbeschleunigung ($\ddot{\Psi}$) gesteuert werden, wobei das Maximum der Gierwinkelbeschleunigung ($\ddot{\Psi}$) ermittelt wird, **dadurch gekennzeichnet, dass** die fahrstabilisierenden Maßnahmen eingeleitet werden, sobald ein Maximum der Gierwinkelbeschleunigung ($\ddot{\Psi}$) erkannt wurde, und dass die fahrstabilisierenden Maßnahmen während einer ESP Regelung unter der Bedingung durchgeführt werden, dass die ESP Schwelle bzw. Schwellen modifiziert werden, bei deren Über- bzw. Unterschreiten ein ESP Eingriff eingeleitet bzw. beendet wird.

2. Verfahren nach Anspruch 1, **dadurch gekennzeichnet, dass** die Gierwinkelgeschwindigkeit ($\dot{\Psi}$) sensorisch erfasst wird und die Gierwinkelbeschleunigung ($\ddot{\Psi}$) in einem Modell abgeleitet wird.

3. Verfahren nach Anspruch 1 oder 2, **dadurch gekennzeichnet, dass** die fahrstabilisierenden Maßnahmen so lange aufrecht erhalten werden, bis die Gierwinkelbeschleunigung ($\ddot{\Psi}$) den Wert Null oder einen Wert in einem Toleranzband um Null erreicht.

4. Verfahren nach einem der Ansprüche 1 bis 3, **dadurch gekennzeichnet, dass** die fahrstabilisierenden Maßnahmen parallel zu einer ESP Regelung durchgeführt werden.

5. Verfahren nach einem der vorhergehenden Ansprüche, **dadurch gekennzeichnet, dass** die ESP Schwelle so modifiziert wird, dass der ESP Eingriff erst bei einer größeren Differenz zwischen der Soll- und Ist-Gierwinkelgeschwindigkeit ($\dot{\Psi}_{soll}$, $\dot{\Psi}_{ist}$) durchgeführt wird.

6. Verfahren nach einem der Ansprüche 1 bis 5, **dadurch gekennzeichnet, dass** als fahrstabilisierende Maßnahme ein ESP Bremsenvoreingriff an mindestens einem Rad durchgeführt wird.

7. Verfahren nach Anspruch 6, **dadurch gekennzeichnet, dass** in dem Zeitraum zwischen zwei aufeinanderfolgenden ESP Bremsenvoreingriffen an den Rädern ein Bremsdruck in den Radbremsen (30-33) aufrecht erhalten wird, der so bemessen ist, dass der Anlegeweg der Bremse im Wesentlichen überbrückt bleibt.

8.  Verfahren nach einem der Ansprüche 6 oder 7, **dadurch gekennzeichnet, dass** die Berechnung des zu erzielenden Gegenmoments des ESP Bremsenvoreingriffs in Korrelation zu der Gierwinkelbeschleunigung ($\ddot{\Psi}$) nach der folgenden Beziehung ermittelt wird:

$$Gegenmoment = Verstärkung * \ddot{\Psi}.$$

9.  Einrichtung zum Stabilisieren eines Gespanns, mit einem Zugfahrzeug und einem durch das Zugfahrzeug bewegten Anhänger, bei dem das Zugfahrzeug im Hinblick auf Schlingerbewegungen überwacht wird und beim Erkennen von tatsächlichem oder erwarteten instabilem Fahrverhalten des Zugfahrzeugs oder Gespanns fahrstabilisierende Maßnahmen ergriffen werden, umfassend eine ESP Fahrstabilitätsregelung mit einem Gierratensensor (26) zum Erfassen der Gierwinkelgeschwindigkeit ($\dot{\Psi}$) und einer Ermittlungseinheit, die aus der Gierwinkelgeschwindigkeit ($\dot{\Psi}$) Größen berechnet, die die Gierwinkelbeschleunigung ($\ddot{\Psi}$) wiedergeben, die der ESP Fahrstabilitätsregelung zur Steuerung des Bremsdrucks in den Radbremsen (30-33) zur Verfügung gestellt werden, wobei das Maximum der Gierwinkelbeschleunigung ($\ddot{\Psi}$) ermittelt wird, **dadurch gekennzeichnet, dass** die Einrichtung zusätzlich eine Einheit zur Modifikation der Schwellen umfasst, bei deren Über- bzw. Unterschreiten ein ESP Eingriff eingeleitet bzw. beendet wird und dass die fahrstabilisierenden Maßnahmen eingeleitet werden, sobald ein Maximum der Gierwinkelbeschleunigung ($\ddot{\Psi}$) erkannt wurde.

## Claims

1.  Method for stabilizing a vehicle combination, with a towing vehicle and a trailer moved by the towing vehicle, in which the towing vehicle is monitored with regard to rolling movements and, if an actual or expected unstable handling performance of the towing vehicle or of the vehicle combination is identified, measures stabilizing the handling are taken, and the measures stabilizing the handling are controlled as a function of the yaw acceleration ($\ddot{\Psi}$), wherein the maximum of the yaw acceleration ($\ddot{\Psi}$) is determined, **characterized in that** the measures stabilizing the handling are initiated as soon as a maximum of the yaw acceleration ($\ddot{\Psi}$) has been identified, and **in that** the measures stabilizing the handling are carried out during an ESP control under the condition that the ESP threshold or thresholds is or are modified, and an ESP intervention is initiated or ended when said threshold or thresholds is or are exceeded or fallen short of.

2.  Method according to Claim 1, **characterized in that** the yaw velocity ($\dot{\Psi}$) is detected by sensor, and the yaw acceleration ($\ddot{\Psi}$) is deduced in a model.

3.  Method according to Claim 1 or 2, **characterized in that** the measures stabilizing the handling are maintained until the yaw acceleration ($\ddot{\Psi}$) reaches the value of zero or a value within a tolerance range around zero.

4.  Method according to one of Claims 1 to 3, **characterized in that** the measures stabilizing the handling are carried out parallel to an ESP control.

5.  Method according to one of the preceding claims, **characterized in that** the ESP threshold is modified in such a manner that the ESP intervention is carried out only in the event of a relatively great difference between the desired and actual yaw velocity ($\dot{\Psi}_{des}$, $\dot{\Psi}_{act}$).

6.  Method according to one of Claims 1 to 5, **characterized in that**, as a measure stabilizing the handling, an ESP braking pre-intervention is carried out at at least one wheel.

7.  Method according to Claim 6, **characterized in that**, in the period of time between two consecutive ESP braking pre-interventions at the wheels, a braking pressure is maintained in the wheel brakes (30-33), said braking pressure being dimensioned in such a manner that the application travel of the brake remains substantially bridged.

8.  Method according to either of Claims 6 and 7, **characterized in that** the calculation of the counter torque to be achieved in the ESP braking pre-intervention is determined in correlation with the yaw acceleration ($\ddot{\Psi}$) according to the following relationship:

$$\texttt{counter torque = reinforcement} * \ddot{\Psi}.$$

9. Device for stabilizing a vehicle combination, with a towing vehicle and a trailer moved by the towing vehicle, in which the towing vehicle is monitored with regard to rolling movements and, if an actual or expected unstable handling performance of the towing vehicle or of the vehicle combination is identified, measures stabilizing the handling are taken, comprising an ESP handling stability control with a yaw rate sensor (26) for detecting the yaw velocity ($\dot{\Psi}$) and a determination unit which, from the yaw velocity ($\dot{\Psi}$), calculates variables which reproduce the yaw acceleration ($\ddot{\Psi}$) and which are provided to the ESP handling stability control in order to control the braking pressure in the wheel brakes (30-33), wherein the maximum of the yaw acceleration ($\ddot{\Psi}$) is determined, **characterized in that** the device additionally comprises a unit for modifying the thresholds, and an ESP intervention is initiated or ended when said thresholds are exceeded or fallen short of, and **in that** the measures stabilizing the handling are initiated as soon as a maximum of the yaw acceleration ($\ddot{\Psi}$) has been identified.

## Revendications

1. Procédé de stabilisation d'un attelage présentant un véhicule tracteur et une remorque déplacée par le véhicule tracteur, dans lequel les déplacements en boucle du véhicule tracteur sont surveillés et des dispositions de stabilisation du roulage sont prises lors de la détection d'un comportement de roulage du véhicule tracteur ou de l'attelage effectivement instable ou dont l'instabilité est attendue, les dispositions de stabilisation du roulage étant commandées en fonction de l'accélération ($\Psi''$) de l'angle de lacet, le maximum de l'accélération ($\Psi''$) de l'angle de lacet étant déterminé,
   **caractérisé en ce que**
   les dispositions de stabilisation du roulage sont appliquées dès qu'un maximum de l'accélération ($\Psi''$) de l'angle de lacet a été détecté et
   **en ce que** les dispositions de stabilisation du roulage sont appliquées pendant une régulation ESP avec la condition que le seuil ESP ou les seuils ESP sont modifiés et qu'une intervention ESP est lancée ou terminée lorsque ces seuils sont dépassés ou ne sont plus atteints.

2. Procédé selon la revendication 1, **caractérisé en ce que** la vitesse ($\Psi'$) de l'angle de lacet est saisie à l'aide de capteurs et **en ce que** l'accélération ($\Psi''$) de l'angle de lacet est déduite d'un modèle.

3. Procédé selon les revendications 1 ou 2, **caractérisé en ce que** les dispositions de stabilisation du roulage sont maintenues jusqu'à ce que l'accélération ($\Psi''$) de l'angle de lacet atteigne la valeur zéro ou une valeur située dans une plage de tolérance autour de zéro.

4. Procédé selon l'une des revendications 1 à 3, **caractérisé en ce que** les dispositions de stabilisation de roulage sont exécutées en parallèle à une régulation ESP.

5. Procédé selon l'une des revendications précédentes, **caractérisé en ce que** le seuil ESP est modifié de telle sorte que l'intervention ESP ne soit exécutée qu'à partir d'une différence assez grande entre la vitesse de consigne et la vitesse effective de l'angle de lacet ($\Psi'_{soll}$, $\Psi'_{ist}$).

6. Procédé selon l'une des revendications 1 à 5, **caractérisé en ce que** les dispositions de stabilisation du roulage exécutées sont une pré-intervention de freinage ESP sur au moins une roue.

7. Procédé selon la revendication 6, **caractérisé en ce que** pendant l'intervalle de temps qui sépare deux pré-interventions ESP de freinage successives sur les roues, une pression de freinage est maintenue dans les freins (30-33) de roues à un niveau tel que le parcours d'application du frein reste essentiellement couvert.

8. Procédé selon l'une des revendications 6 ou 7, **caractérisé en ce que** le calcul du couple opposé à atteindre pour la pré-intervention ESP de freinage en corrélation à l'accélération ($\Psi''$) de l'angle de lacet est déterminé par l'équation

EP 1 562 808 B1

suivante :

```
couple opposé = amplification * Ψ''.
```

9. Dispositif de stabilisation d'un attelage qui présente un véhicule tracteur et une remorque déplacée par le véhicule tracteur, dans lequel les déplacements en boucle du véhicule tracteur sont surveillés et, lorsqu'un comportement de roulage du véhicule tracteur ou de l'attelage effectivement instable ou dont l'instabilité est attendue, des dispositions de stabilisation du roulage sont prises et comprennent une régulation ESP de la stabilité de roulage, avec un capteur (26) de vitesse de lacet qui détecte la vitesse (Ψ') de l'angle de lacet et une unité de détermination qui, à partir de la vitesse (Ψ') de l'angle de lacet, calcule des grandeurs qui représentent l'accélération (Ψ'') de l'angle de lacet qui sont mises à disposition de la régulation ESP de stabilité de roulage pour commander la pression de freinage dans les freins (30-33) de roues, le maximum de l'accélération (Ψ'') de l'angle de lacet étant déterminé, **caractérisé en ce que** le dispositif comporte de plus une unité de modification des seuils qui lance ou termine une intervention ESP lorsque ces seuils sont dépassés ou ne sont plus atteints et **en ce que** les dispositions de stabilisation du roulage sont lancées dès qu'un maximum de l'accélération (Ψ'') de l'angle de lacet a été détecté.

8

## Fig. 1

EP 1 562 808 B1

Fig. 2

Fig. 3

10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19953413 A1
- DE 19913342 A1
- DE 19742707 A1
- DE 10034222 A1
- DE 19964048 A1
- DE 19742702 C2
- DE 10048418